# EUROPEAN PATENT APPLICATION

(11) **EP 0 608 935 A2**
(43) Date of publication of application: **03.08.1994**
(21) Application number: 94200113.2
(22) Date of filing: 18.01.1994
(51) Int. Cl.: H04N 7/01, H04N 9/79, H04N 9/78, H04N 9/83, H04N 9/87, H04N 9/88

(54) **Apparatus for reproducing and processing a video signal and circuit arrangement for such apparatus**

(30) Priority: 26.01.1993 AT 121/93
(71) Applicant: Philips Electronics N.V., 5621 BA Eindhoven (NL)
(72) Inventor: Gedl, Karl, c/o INT. OCTROOIBUREAU B.V., NL-5656 AA Eindhoven (NL)
(74) Representative: van der Kruk, Willem Leonardus

(57) **Abstract**

An apparatus (1) for reproducing and processing a video signal has at least one scanning means (13, 14), a frequency demodulator (27), a frequency reconverter (36), a first combination device (41) coupled to the output of the frequency demodulator (27) and to the output of the frequency reconverter (36), one delay device (46) coupled to the output of the first combination device (41), which delay device has a delay time equal to one line period, a filter device (49) coupled to the output of said one delay device (46) to extract the luminance signal component ((Y)P-1H) delayed by one line period, and a second combination device (59) coupled to the output of the first combination device (41) and to the output of the one delay device (46) to supply a comb-filtered reconverted colour signal component ((C)P-COMB). A further delay device (52) is included between the one delay device (46) and the second combination device (59) and has a delay time equal to one line period, which renders the apparatus suitable for processing video signals in accordance with the PAL standard.

## Description

The invention relates to an apparatus for reproducing and processing a video signal stored on a record carrier, the luminance signal component of the video signal being stored on the record carrier in frequency-modulated form and the colour signal component being stored on said record carrier in frequency-converted form, which apparatus has at least one scanning means for scanning the record carrier and reproducing the stored luminance signal component and the stored colour signal component of a video signal, a frequency demodulator for the frequency demodulation of the reproduced luminance signal component, which demodulator is coupled to the output of the scanning means and supplies a frequency-demodulated luminance signal component on an output, a frequency reconverter for the frequency reconversion of the reproduced colour signal component, which reconverter is coupled to the output of the scanning means and supplies a reconverted colour signal component on an output, a first combination device coupled to the output of the frequency demodulator and to the output of the frequency reconverter, which first combination device combines the demodulated luminance signal component and the reconverted colour signal component to supply a combined signal on an output, a first delay device coupled to the output of the first combination device, which delay device has a delay time equal to one line period of the video signal and supplies on an output a combined signal delayed by one line period of the video signal, a filter device coupled to the output of the first delay device to extract the luminance signal component from the delayed combined signal and supplying on an output a demodulated luminance signal component delayed by one line period of the video signal, and a second combination device having a first input coupled to the output of the first combination device and having a second input coupled to the output of the first delay device to supply a comb-filtered reconverted colour signal component on an output.

The invention further relates to a circuit arrangement for such an apparatus, for processing a video signal reproduced from a record carrier, the luminance signal component of the video signal being reproducible from the record carrier in frequency-modulated form and the colour signal component being reproducible from said record carrier in frequency-converted form, which arrangement has a frequency demodulator for the frequency demodulation of the reproduced luminance signal component, which demodulator supplies a frequency-demodulated luminance signal component on an output, a frequency reconverter for the frequency reconversion of the reproduced colour signal component, which reconverter supplies a reconverted colour signal component on an output, a first combination device coupled to the output of the frequency demodulator and to the output of the frequency reconverter, which first combination device combines the demodulated luminance signal component and the reconverted colour signal component to supply a combined signal on an output, first delay device coupled to the output of the first combination device, which delay device has a delay time equal to one line period of the video signal and supplies on an output a combined signal delayed by one line period of the video signal, a filter device coupled to the output of the first delay device to extract the luminance signal component from the delayed combined signal and supplying on an output a demodulated luminance signal component delayed by one line period of the video signal, and a second combination device having a first input coupled to the output of the first combination device and having a second input coupled to the output of the first delay device to supply a comb-filtered reconverted colour signal component on an output.

An apparatus of the type defined in the opening paragraph and a circuit arrangement of the type defined in the second paragraph are known and are shown and described in detail in an article in the magazine IEEE Transactions on Consumer Electronics, Vol. 37, No. 3, August 1991, pages 237 to 243. However, the apparatus or circuit arrangement described therein is only suitable for processing video signals in accordance with the NTSC standard. Although the article states broadly that one of the integrated devices mentioned therein is suitable not only for processing video signals in accordance with the NTSC standard but also for processing video signals in accordance with the PAL standard and the SECAM standard, this article does not disclose in any detail how an apparatus of the type defined in the first paragraph and a circuit arrangement of the type defined in the second paragraph should be constructed in order to be capable of processing video signals in accordance with the PAL standard.

It is an object of the invention to construct an apparatus of the type defined in the opening paragraph in such a manner that it is capable of reproducing and simply and effectively processing video signals in accordance with the PAL standard. To this end the invention is characterized in that a further delay device is included between the output of the first delay device and the second input of the second combination device, which further delay device has a delay time equal to one line period of the video signal and supplies on an output a signal delayed by two line periods of the video signal. This provides an apparatus for reproducing and simply and effectively processing video signals in accordance with the PAL standard, requiring only a minimal additional expense in comparison with the known apparatus. This apparatus in accordance with the invention for the reproduction and processing of PAL video signals has the advantage that the reproduced luminance signal component of a video signal is delayed by only one line period of the video signal, *i.e*. exhibits only a small vertical shift, and at the same time a correct comb-filtering of the reproduced colour signal component of a video signal is obtained for which a signal delay of two line periods is required in the case of a video signal composed in accordance with the PAL standard.

It is to be noted that, starting from an apparatus of the type defined in the opening paragraph, which is only suitable for processing video signals in accordance with the NTSC standard, it is also possible to obtain an alternative apparatus for processing video signals in accordance with the PAL standard in that the first delay device, which is arranged after the first combination device in order to delay the combined signal supplied by the first combination device and whose delay time is equal to one line period of the video signal in an apparatus for processing NTSC video signals, is replaced by a delay device whose delay time is equal to two line periods of the video signal, as is known *per se* from EP 0,183,438 B1. In such an alternative apparatus the reproduced luminance signal component at the output of the filter device for extracting the luminance signal component is then delayed by two line periods, *i.e.* it exhibits a larger vertical shift - leading to comparatively wide or high blurred transitions at vertical jumps - than in the apparatus in accordance with the invention, in which two delay devices each having a delay of one line period are arranged in series with one another, the filter device for extracting the reproduced luminance signal component already being arranged after the first one of these two delay devices. Such an alternative apparatus comprising a single delay device with a delay of two line periods further has the disadvantage that - as is known from the cited article - a vertical deemphasis circuit constructed using this delay device, which circuit is operative in the so-called long-play reproduction modes and is basically constructed as a feedback comb filter for noise reduction, it is more susceptible to instability owing to the longer delay time, which can be compensated for by a smaller feedback factor but this has the disadvantage that it reduces the performance of the vertical deemphasis circuit. The apparatus in accordance with the invention does not have this disadvantage. Such an alternative apparatus with a single delay device having a delay time of two line periods further has the disadvantage that with such a delay device it is not possible - as is also known from the cited article - to construct a vertical preemphasis circuit which is operative in a long-play recording mode, because such a preemphasis circuit requires a delay device having a delay of only one line period. The apparatus in accordance with the invention does not have this disadvantage. Another disadvantage of such an alternative apparatus with a single delay device having a delay time of two line periods is that in a dropout compensation circuit constructed using this delay device - as is also known from the cited article - a signal delayed by two line periods is used as compensation signal for a signal which exhibits a dropout, but in comparison with the signal which exhibits a dropout it has the drawback of larger signal differences than a signal delayed by only one line period, as is available in this connection in an apparatus in accordance with the invention.

In an apparatus in accordance with the invention the two delay devices may each be formed by a switched-capacitor device. It is found to be particularly advantageous if the first delay device and the further delay device are each formed by a charge-coupled device, which charge-coupled devices each have a clock input, and there is provided a clock-generator device connected to the clock inputs to generate a clock signal whose clock frequency is equal to at least three times the colour subcarrier frequency of the video signal and which is applied to the two clock inputs of the charge-coupled devices. Such a construction is advantageous because with such charge-coupled devices (CCDs) it is comparatively simple to delay signals, such as the luminance signal component of a video signal, with low-frequency components of only a few Hertz and with signal components which extend from these low-frequency signal components over a large frequency band of a few MHz, and because such charge-coupled devices require only little space.

With an apparatus in accordance with the invention it is also found to be advantageous if in addition to the further delay device a switching device switchable between two switching states is included between the output of the first delay device and the second input of the second combination device, the combined signal delayed by one line period of the video signal and appearing on the output of the first delay device being applied to the second input of the second combination device in the one switching state of said switching device and the signal delayed by two line periods of the video signal and present at the output of the further delay device being applied to said second input of said second combination device in the other switching state of said switching device. Thus, by means of the switching device the further delay device can be disabled very simply, the present apparatus being suitable not only for processing PAL video signals but also for processing NTSC video signals, which is advantageous for realizing so-called multi-standard apparatuses. Any further switching operations which may be required, for example, switching of the frequency reconverter, of filter device, of the first delay device and, if applicable, of the clock-generator device.

It is another object of the invention to construct a circuit arrangement of the type defined in the second paragraph in such a manner that it is capable of simply and effectively processing video signals in accordance with the PAL standard. To this end such a circuit arrangement in accordance with the invention is characterized in that a further delay device is included between the output of the first delay device and the second input of the second combination device, which further delay device has a delay time equal to one line period of the video signal and supplies on an output a signal delayed by two line periods of the video signal. This results in a circuit arrangement for simply and effectively processing video signals in accordance with the PAL standard, which requires only a minimal additional expense in comparison with the known circuit arrangement. This circuit arrangement in accordance with the invention for processing PAL video signals has the advantage that the reproduced luminance signal component of a video signal is delayed only by one line period of the video signal, *i.e.* exhibits only a small vertical shift, and at the same time a correct comb-filtering of the reproduced colour signal component of a video signal is obtained for which a signal delay of two line periods is required in the case of a video signal composed in accordance with the PAL standard.

In a circuit arrangement in accordance with the invention the two delay devices may each be formed by a switched-capacitor device. However, it is found to be advantageous if the first delay device and the further delay device are each formed by a charge-coupled device, which charge-coupled devices each have a clock input, and there is provided a clock-generator device connected to the clock inputs, the clock-generator device being adapted to generate a clock signal whose clock frequency is equal to at least three times the colour subcarrier frequency of the video signal and which is applied to the two clock inputs of the charge-coupled devices. Such a circuit arrangement is advantageous because with such charge-coupled devices it is comparatively simple to delay signals, such as the luminance signal component of a video signal, with low-frequency components of only a few Hertz and with signal components which extend from these low-frequency signal components over a large frequency band of a few MHz, and because such charge-coupled devices require only little space.

In a circuit arrangement in accordance with the invention it is found to be advantageous if in addition to the further delay device a switching device switchable between two switching states is included between the output of the first delay device and the second input of the second combination device, the combined signal delayed by one line period of the video signal and appearing on the output of the first delay device being applied to the second input of the second combination device in the one switching state of said switching device and the signal delayed by two line periods of the video signal and present at the output of the further delay device being applied to said second input of said second combination device in the other switching state of said switching device. In this way, the circuit arrangement in accordance with the invention can be switched simply between a mode for processing video signals in accordance with the PAL standard and a mode for processing video signals in accordance with the NTSC standard.

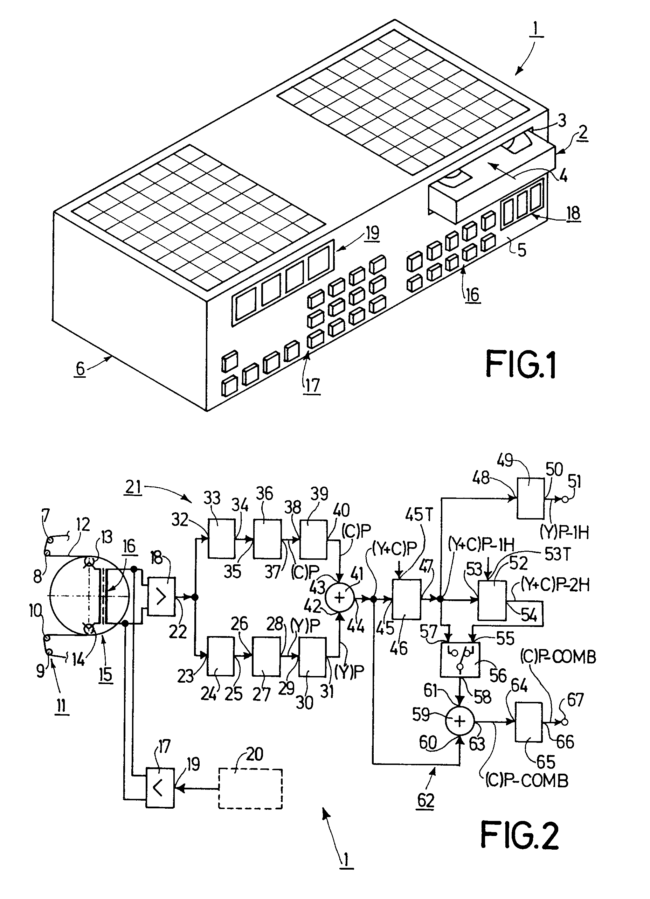

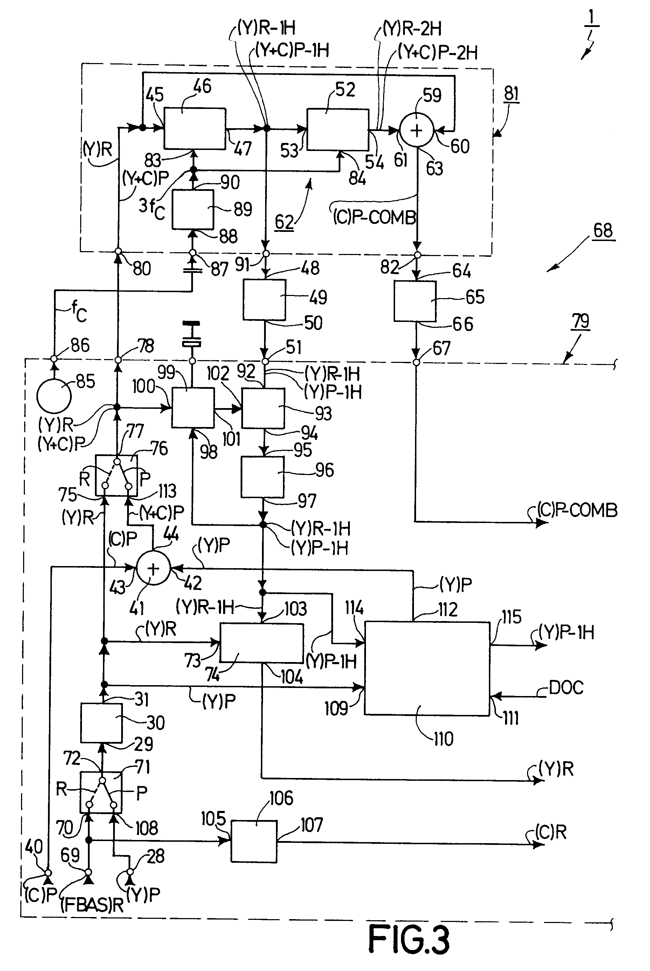

The invention will now be described in more detail on the basis of two exemplary embodiments to which the invention is not limited. Fig. 1 is a reduced-scale oblique view showing diagrammatically an apparatus for recording, reproducing and processing video signals and audio signals, which apparatus takes the form of a so-called video recorder, into which a cassette can be loaded, which cassette accommodates a record carrier in the form of a magnetic tape which extends between two reel hubs and on/from which video signals can be recorded and reproduced, respectively, in oblique tracks by means of rotatable magnetic heads. Fig. 2 shows diagrammatically a part of the apparatus shown in Fig. 1, which part of the apparatus includes a drum-shaped scanning device accommodating the rotatable magnetic heads, and which comprises a circuit arrangement, corresponding to a first exemplary embodiment of the invention, for processing the video signals which can be reproduced from the magnetic tape by means of the rotatable magnetic heads. Fig. 3 shows a circuit arrangement in accordance with the invention, which corresponds to a second exemplary embodiment of the invention.

Fig. 1 shows an apparatus 1 for recording, reproducing and processing video signals and audio signals on/from a magnetic tape in the form of an apparatus which is generally referred to as a video recorder. The magnetic tape is accommodated in a cassette 2, which is also shown in Fig. 1. The cassette 2 can be inserted by hand into the apparatus 1 in a direction indicated by an arrow 4 through an opening 3 which can be closed by means of a cover, which can be pivoted into the interior of the apparatus. The opening 3 is situated in a front wall 5 of the housing 6 of the apparatus 1. When the cassette 2 is loaded into the apparatus 1 it is inserted into a movable cassette holder by means of which, after complete insertion of the cassette into the apparatus, the cassette 2 is drawn into the apparatus 1 along an L-shaped path, first parallel to the cassette main walls, after which it is lowered substantially perpendicularly to the cassette main walls into an operating position inside the apparatus. In this operating position the cassette 2 is positioned and movable tape guides 7, 8 and 9, 10 of a tape-threading device 11 are introduced into the cassette 2 to extract the magnetic tape 12 from the cassette 2, the magnetic tape 12 being brought into operative contact with stationary tape guides of the apparatus and stationary magnetic heads and - as is shown diagrammatically in Fig. 2 - with a drum-shaped scanning device 15 accommodating rotatable magnetic heads 13 and 14. For starting the modes of the apparatus 1, such as "recording", "playback", "fast forward", "fast reverse" and the like the apparatus 1 has a first set 16 of keys on the front wall 5 of its housing. For programming the apparatus 1 and for entering further data the apparatus 1 has a second set 17 of keys on the front wall 5 of its housing. Moreover, the apparatus 1 has two displays 18 and 19 to display, for example, the count of a tape-length measurement counter and the daytime.

The apparatus 1 is intended and constructed for reproducing and processing video signals in accordance with the PAL standard and in accordance with the NTSC standard. The video signals to be reproduced are stored in oblique tracks on the magnetic tape 12, the luminance signal component Y of a video signal being recorded on the magnetic tape 12 in frequency-modulated form and the colour signal component C of a video signal being recorded on this tape in frequency-converted form. To scan the magnetic tape 12 and to reproduce the recorded luminance signal component Y and the recorded colour signal component C of a video signal the apparatus 1 has two rotatably drivable magnetic heads 13 and 14, which form part of the drum-shaped scanning device 15. The drum-shaped scanning device 15 further comprises a rotary transformer 16, shown diagrammatically, *via* which the two rotatable magnetic heads 13 and 14 are connected to a recording-head amplifier device 17 and to a reproducing-head amplifier device 18. Video signals to be recorded on the magnetic tape 12 can be applied from a recording-signal processing device 20, shown only in broken lines in Fig. 2, to an input 19 of the recording-head amplifier device 17. It is to be noted that the recording signal processing device 20 supplied may also include parts of a playback signal-processing device 21, as is in fact the case in the exemplary embodiment shown in Fig. 3.

The playback signal-processing device 21 is connected to an output 22 of the reproducing head amplifier device 18. The output 22 of the reproducing head amplifier device 18 is connected to the input 23 of a first filter device 24 for the extraction of the reproduced frequency-modulated luminance signal component Y, which is formed by a high-pass filter and which supplies the frequency-modulated luminance signal component Y reproduced from the magnetic tape 12 to an output 25. The output 25 of the first filter device 24 is connected to the input 26 of a frequency demodulator 27, which serves for the frequency demodulation of the reproduced frequency-modulated luminance signal component Y and which supplies the reproduced frequency-modulated luminance signal component Y (P) to an output 28. The output 28 of the frequency demodulator 27 is connected to an input 29 of a second filter device 30, which is formed by a low-pass filter and which supplies the filtered frequency-demodulated luminance signal component (Y)P to an output 31.

Moreover, an input 32 of a third filter device 33 for extracting the reproduced frequency-converted colour signal component C is connected to the output 22 of the reproducing-head amplifier device 18, which third filter device is formed by a low-pass filter and which supplies the colour frequency-converted signal component C reproduced from the magnetic tape 12 to an output 34. The output 34 of the third filter device 33 is connected to an input 35 of a frequency reconverter 36 provided for the reconversion of the frequency of the reproduced colour signal component C and which produces a reconverted colour signal component (C)P on an output 37. The output 37 of the frequency reconverter 36 is connected to an input 38 of a fourth filter device 39, which is formed by a band-pass filter and which supplies the reconverted filtered colour signal component (C)P on an output 40.

The playback signal-processing device 21 further comprises a first combination device 41 arranged in series with the output 28 of the frequency demodulator 27 *via* the second filter device 30 and with the output 37 of the frequency reconverter 36 *via* the fourth filter device 39, the output 31 of the second filter device 30 being connected to a first input 42 of the first combination device 41 and the output 40 of the fourth filter device 39 being connected to a second input 43 of the first combination device 41. In the present case the first combination device 41 is formed by a summing device. However, it is to be noted that the first combinations device 41 may alternatively be formed by a subtraction device; for reasons not mentioned here it may be effective to invert the phase of, for example, one of the two signal components applied to the first combination device 41 before it is applied to the device 41, the first combination device 41 then being constructed as a subtraction device. In any case the first combination device 41 is constructed so as to combine the reproduced frequency-demodulated luminance signal component Y(P) and the reproduced reconverted colour signal component C(P) and to supply a sum signal (Y+C)P on an output 44.

The output 44 of the first combination device 41 is connected to an input 45 of a delay device 46 whose delay time is equal to one line period of the video signal and which supplies a sum signal (Y+C)P-1H delayed by one line period of the video signal. The output 47 of a delay device 46 is connected to the input 48 of a fifth filter device 49 for extracting the luminance signal component from the delayed sum signal (Y+C)P-H, a frequency-demodulated luminance signal component (Y)P-1H delayed by one line period of the video signal being produced on an output 50 of said filter device. From the output 50 of the fifth filter device 49 the delayed frequency-demodulated luminance signal component (Y)P-1H is applied to a terminal 51 of the playback signal-processing device 21, which supplies the delayed frequency-demodulated luminance signal component (Y)P-1H to subsequent parts of the playback signal-processing device 21. However, for reasons of simplicity these parts are not shown because they are not relevant in the present context. As explained above, the frequency-demodulated reproduced luminance signal component (Y)P-1H has a delay of only one line period, which is very advantageous in view of a minimal vertical shift.

In the present playback signal-processing device 21 the one delay device 46 is followed by a further delay device 52, the output 47 of the one delay device 46 being connected to an input 53 of the further delay device 52. The delay time of the further delay device is also equal to one line period of the video signal. The further delay device 52 produces a sum signal (Y+C)P-2H on an output 54, which sum signal has been delayed by two line periods of the video signal.

The two delay devices 46 and 52 suitably each comprise charge-coupled devices (CCDs). However, alternatively they may comprise switched-capacitor devices. The two charge-coupled devices each have a clock input 45T and 53T. The two clock inputs 45 T and 53T receive a clock signal whose clock frequency is equal to at least three times the colour subcarrier frequency of the video signal to be delayed. The clock generation in the apparatus 1 in accordance with the embodiment shown in Figs. 1 and 2 has not been described in any detail but this can be effected in the same way as in the circuit arrangement described hereinafter with reference to Fig. 3.

A switching device 56, which is switchable between two switching states, has a first input 55 coupled to the output 54 of the further delay device 52 and has a second input 57 coupled to the output 47 of the one delay device 46. When the switching device 56 is in the switching state shown in Fig. 2 an output 58 of the switching device 56 will supply the sum signal (Y+C)P-2H, which has been delayed by two line periods of the video signal and which has been applied to the first input 55 of the switching device. When the switching device 56 is in the switching state not shown in Fig. 2 the output 58 of the switching device 56 will supply the sum signal (Y+C)P-1H, which has been delayed by only one line period of the video signal and which has been applied to the second input 57 of the switching device.

The playback signal-processing device 21 further comprises a second combination device 59 having a first input 60 coupled to the output 44 of the first combination device 41 and having a second input 61 coupled to the output 47 of the one delay device 46 *via* the switching device 56, *i.e. via* the second input 57 and the output 58 of this switching device. In the present playback signal-processing device 21 shown in Fig. 2 the second input 61 of the second combination device 59 is also coupled to the output 54 of the further delay device 52 *via* the switching device 56, *i.e. via* the first input 55 and the output 58 of this switching device. In the same way as the first combination device 41 the second combination device 59 is also constructed as a summing device. In the same way as the first combination device 41 the second combination device 59 may also be constituted by a subtraction device. Together with the two delay device 46 and 52 the second combination device 59 forms a comb filter device 62 for comb-filtering of the colour signal component (C)P. In any case, the second combination device 59 is constructed to produce on an output 63 a comb-filtered reconverted colour signal component (C)P-COMB. The output 63 of the second combination device 59 is connected to the input 64 of a sixth filter device 65, which is constructed as a band-pass filter and which has been provided to remove undesired components from the comb-filtered reconverted colour signal component (C)P-COMB. The sixth filter device 65 produces on an output 66 a filtered reconverted colour signal component (C)P-COMB, which is applied to a terminal 67 of the playback signal-processing device 21, from which it is applied to subsequent parts of the playback signal-processing device 21, but these parts are not shown for reasons of simplicity because they are not relevant in the present context. As explained above, this also provides a correct comb-filtering of the reconverted reproduced colour signal component.

When the switching device 56 is in its switching state shown in Fig. 2 both the one delay device 46 and the further delay device 52 are operative, in which state the present apparatus 1 and its playback signal-processing device 21 are capable of processing video signals in accordance with the PAL standard. When the switching device 56 is in its switching state not shown in Fig. 2 only the delay device 46 is operative, in which case the apparatus 1 and its playback signal-processing device 21 are capable of processing video signals in accordance with the NTSC standard. In this last-mentioned case not only the switching device 56 is set to the switching state not shown in Fig. 2 but the frequency reconverter 36 is also switched over and, in addition, the first filter device, the second filter device and the fourth filter device may be switched over to adapt their frequency characteristics and, if desired, the delay device 46 may be switched over to adapt its delay time and the clock frequency of the clock signal applied to it.

A switching device may also be arranged in another way between the output 47 of the one delay device 46 and the second input 61 of the second combination device 59, in addition to the further delay device 52. For example, the base terminal of a switching device, which terminal serves as an input, may then be connected to the output 47 of the one delay device 46, a first output of this switching device, which first output is connected to the base terminal in a first switching state, may be connected to the second input 61 of the second combination device 59, and a second output of this switching device, which second output is connected to the base terminal in a second switching state, may be connected to the input 53 of the further delay device 52, the output 54 of the further delay device 52 being connected directly to the second input 61 of the second combination device 59. It is also possible to provide a switching device between the input 53 and the output 54 of the further delay device 52 parallel to the further delay device 52, which switching device enables the further delay device 52 to be bypassed and thereby rendered inoperative.

In the playback signal-processing device 21 shown in Fig. 2 the sum signal (Y+C)P-1H delayed by one line period of the video signal and appearing on the output 47 of the one delay device 46 is applied directly to the input 53 of the further delay device 52, so that this further delay device 52 should also be suitable for delaying the sum signal (Y+C)P-1H and produces its output 54 a sum signal (Y+C)P-2H delayed by two line periods of the video signal. However, it is also possible to arrange an additional filter device for the extraction of the colour signal component before the input 53 of the further delay device 52, so that the further filter device 52 now only receives the colour signal component and, consequently, the further delay device 52 should only be capable of delaying the colour signal component and produces on its output 54 a signal which has been delayed by two line periods of the video signal, *i.e.* the colour signal component (C)P-2H. In this case allowance should be made for the influence of the additional filter device on the propagation delay of the colour signal component applied to the further delay device 52, in order to guarantee a correct comb-filtering of the colour signal component by the comb-filter device 62. For this purpose it is possible, for example, to arrange a propagation-delay device before the first input 60 of the second combination device 59, which influences the propagation delay in the same way as the additional filter device preceding the further delay device 52. The influence of the additional filter device on the propagation delay can also be allowed for in the further delay device 52 by a suitable reduction of its delay time.

As is apparent from the above description of the apparatus 1 with reference to Figs. 1 and 2, it is very simple to realize a multi-standard apparatus which is suitable both for reproducing and processing video signals in accordance with the PAL standard and for reproducing and processing video signals in accordance with the NTSC standard.

Fig. 3 shows a part of a circuit arrangement 68 for processing PAL video signals to be recorded on a magnetic tape and for processing PAL video signals reproduced from a magnetic tape, which arrangement forms part of an apparatus 1 for recording, reproducing and processing video signals in accordance with the PAL standard, of which video signals the luminance components can be recorded on and reproduced from the magnetic tape in frequency-modulated form and the colour signal components can be recorded on and reproduced from the magnetic tape in frequency-converted form.

A video signal to be recorded (FBAS)R is applied to a terminal 69 of the circuit arrangement 68 from an external video signal source or an internal video signal source (front end). From this terminal 69 the video signal to be recorded (FBAS)R can be applied to a first recording/playback switching device 71, which in the "recording" mode of the apparatus 1 is set to its switching state R indicated by a broken line. In this switching state R of the first recording/playback switching device 71 the video signal to be recorded (FBAS)R, which is applied to its first input 70, is transferred to its output 72. From the output 72 the video signal (FBAS)R is applied to the input 29 of the second filter device 30, which is formed by a low-pass filter and which serves for extracting the luminance signal component (Y)R from the applied video signal (FBAS)R. The second filter device 30 supplies the extracted luminance signal component (Y)R on its output 31. The luminance signal component (Y)R on the output 31 is applied to an input 73 of a vertical preemphasis device 74, which is inoperative in a so-called short-play recording mode and which is operative in a so-called long-play recording mode. In addition, the luminance signal component (Y)R on the output 31 is applied to a first input 75 of a second recording/playback switching device 76. In its switching state R the second recording/playback switching device 76 transfers the luminance signal component (Y)R to its output 77. From the output 77 the luminance signal component (Y)R is applied to a terminal 78 of the circuit arrangement 68. The terminal 78 is a pin of an integrated module 79, which is diagrammatically indicated in broken lines in Fig. 3 and which is often referred to as a Y/C processor. The terminal 78 of the module 79 is connected to a terminal 80 of a further module 81.

The further module 81 is essentially constructed as a delay module and comprises a first delay device 46 and a second delay device 52, each formed by a charge-coupled device (CCD). The module 81 further includes the second combination device 59, which in the present case also consists of a summing device and which has its first input 60 connected to the terminal 80 and its second input 61 to the output 54 of the second delay device 52. The output 63 of the summing device 59 is connected to a terminal 82 of the module 81. In the present case the two delay devices 46 and 52 and the summing device 59 again form a comb-filter device 62 realized by means of the module 81.

For the operation of the two CCD delay devices 46 and 52 a clock signal must be applied to a respective control input 83 or 84. For the generation of the clock signal the module 79 includes a quartz oscillator 85, whose output signal is applied to a terminal 86 of the module 79. The output signal of the quartz oscillator 85 has a frequency corresponding to the colour subcarrier frequency f_{C} in the PAL system, which is 4.43 MHz. The terminal 86 of the module 99 is connected to a terminal 87 of the module 62. The terminal 87 is connected to an input 88 of a frequency multiplier 89 formed by a so-called PLL circuit, which preferably triples the frequency of the oscillator signal applied to it and which produces on its output 90 a clock signal having a clock frequency 3f_{C} for the two delay devices 46 and 52, which clock signal is applied to the two control inputs 83 and 84. Alternatively, the frequency multiplier 89 may quadruple the frequency of the oscillator signal applied to it, in which case the clock frequency is 4f_{C}.

The output 47 of the first delay device 46 is connected to a terminal 91 of the module 81, which terminal is connected to the input 48 of the fifth filter device 49 whose output 50 is connected to a terminal 51 of the module 79. The terminal 51 of the module 79 is connected to an input 92 of a voltage-controlled amplifier 93 by means of which the luminance signal component (Y)R-1H is adjusted to a desired value, said luminance signal component being supplied by the first delay device 46 and being applied to the voltage-controlled amplifier 93 *via* the fifth filter device 49, which is constructed as low-pass filter. The output 94 of the amplifier 93 has an input 95 connected to a further filter device 96 constructed as a colour signal component trap to reject residual colour signal components in the luminance signal component (Y)R-1H. From the output 97 of the filter device 96 the luminance signal component (Y)R-1H is applied to an input 98 of a comparator device 99 having another input 100, to which the luminance signal component (Y)R from the output 77 of the second recording/playback switching device 76 is applied. After comparison of the two components applied to its two inputs 98 and 100 the comparator device 99 produces a control signal on its output 101, which control signal is applied to a control input 102 of the voltage-controlled amplifier 93 to control this amplifier so as to adjust the luminance signal component (Y)R-1H applied to its input 92 to the desired value in relation to the luminance signal component (Y)R supplied by the second recording/playback switching device 76.

From the output 97 of the filter device 96 the luminance signal component (Y)R-1H is applied to a further input 103 of the vertical preemphasis device 74. This vertical preemphasis device 74 is constructed as a comb-filter device providing vertical preemphasis of the luminance signal component by comb-filtering of the luminance signal components (Y)R and (Y)R-1H applied to the device. The vertical preemphasis device 74 produces on an output 104 a preemphasized luminance signal component (Y)R, which is subjected to further processing, *i.e.* frequency modulation, in the module 79 but this will not be described in more detail here.

The video signal to be recorded (FBAS)R, which is applied to the terminal 69, is also applied to an input 105 of a further filter device 106, which has been provided to extract the colour signal component (C)R from the video signal to be recorded (FBAS)R. The extracted colour signal component (C)R is produced on an output 107 of a further filter device 106 and is subjected to further processing, *i.e.* frequency-conversion, in the module 79 but this will not be described in more detail here.

After further processing in the module 79 the luminance signal component to be recorded (Y)R produced by the vertical preemphasis device 74 on its output 104 and the colour signal component to be recorded (C)R produced by the further filter device 106 on its output 107 are applied to magnetic heads in order to be recorded on a magnetic tape.

When previously recorded video signals are subsequently reproduced - as already described for the apparatus 1 with reference to Figs. 1 and 2 - the reproduced luminance signal component is demodulated in a frequency demodulator which is not shown in Fig. 3 but whose output 28 is shown in Fig. 3. Moreover, during such a reproduction the reproduced colour signal component is reconverted in a frequency reconverter, not shown in Fig. 3, whose output signal is applied to a fourth filter device, neither shown in Fig. 3, to extract the reconverted reproduced colour signal component (C)P. Fig. 3 shows the output 40 of this fourth filter device.

The demodulated reproduced luminance signal component (Y)P appearing on the output 28 of the frequency demodulator is applied to a second input 108 of the first recording/playback switching device 71 and is transferred to the output 72 of this switching device 71 in the switching state P of this device, which is shown as a solid line. From the output 72 the luminance signal component (Y)P is applied to an input 109 of a circuit 110 *via* the low-pass filter 30, which circuit in a manner known *per se* includes a vertical deemphasis device, a vertical noise reduction device and a dropout compensator. The vertical deemphasis device can essentially be disabled in a shortplay reproduction mode and activated in a longplay reproduction mode. Conversely, the vertical noise reduction device (line noise canceller) can be activated in a shortplay reproduction mode and disabled in a longplay reproduction mode. The dropout compensator is activated when a signal dropout occurs, activation being effected by means of a control signal DOC supplied to a control input 111 of the circuit 110 by a dropout detector, not shown, of the module 79.

The reproduced luminance signal component (Y)P applied to the input 109 of the circuit 110 is transferred to an output 112 of this circuit 110, from which it is applied to the first input 42 of the first combination device 41, whose second input 43 receives the reproduced colour signal component (C)P appearing on the output 40 of the fourth filter device, not shown, as already described with reference to Fig. 2. In the circuit arrangement shown in Fig. 3 the first combination device 41 is also formed by a summing device, but this is not necessary. From the output 44 of the summing device 41 the reproduced sum signal (Y+C)P is applied to a second input 113 of the second recording/playback switching device 76, which transfers the sum signal (Y+C)P to its output 77 in its second switching state P. From the output 77 the sum signal (Y+C)P, in the same way as in the "recording" mode, is applied to the input 100 of the comparator device 99 and, *via* the terminals 78 and 80, also to the in[ut 45 of the first delay device 46 and the first input 60 of the second combination device 59. From the output 47 of the first delay device 46 the reproduced sum signal (Y+C)P-1H, which has been delayed by one line period of the video signal, is applied to the input 48 of the low-pass filter 49 *via* the terminal 91, so that the reproduced luminance signal component (Y)P-1H, which has been delayed by one line period, appears on the output 50 of the low-pass filter 49, which is applied to the voltage-controlled amplifier 93 *via* the terminal 51 of the module 79 and from this amplifier to the colour signal component trap 96. From the output 97 of the colour signal component trap 96 the reproduced luminance signal component (Y)P-1H, which has been delayed by one line period, is applied to the input 98 of the comparator device 99 and, in the "reproduction" mode just described it is applied to a further input 114 of the circuit 110. After processing of the luminance signal components (Y)P and (Y)P-1H applied to the inputs 109 and 114 of the circuit 110 this circuit 110 supplies on an output 115 a luminance signal component (Y)P-1H processed by means of the circuit 110, which is subsequently subjected to further processing in the module 79.

Similarly to the embodiment described with reference to Figs. 1 and 2, the second summing device 59 in the circuit arrangement shown in Fig. 3 also supplies a comb-filtered reproduced colour signal component (C)P-COMB on its output 63, which signal component is applied to the input 64 of the sixth filter device 65 *via* the terminal 82, which filter device is constructed as a band-pass filter. The sixth filter device 65 produces on its output 66 the additionally filtered and previously comb-filtered reproduced colour signal component (C)P-COMB, which is applied to the terminal 67 of the module 79, from which terminal the colour signal component (C)P-COMB is applied to a further signal processing device in the module 79.

After the further signal processing of the reproduced luminance signal component (Y)P-1H appearing on the output 115 of the circuit 110 and of the reproduced colour signal component (C)P-COMB applied to the terminal 67 these components are applied to, for example, a television receiver in order to be displayed.

As will be apparent from the above description of the circuit arrangement 68 of the apparatus 1 with reference to Fig. 3, it is very simple to realize an apparatus for recording, reproducing and processing video signals in accordance with the PAL standard, in which in an advantageous manner the reproduced luminance signal component of a video signal is delayed by only one line period of the video signal and in which at the same time a correct comb-filtering of the reproduced colour signal component of a video signal is possible, for which the signal composition of a video signal in accordance with the PAL standard requires a signal delay by two line periods. Another advantage of the circuit arrangement shown in Fig. 3 is that the desired result can be obtained with only a few electrical connections between the two integrated modules.

The circuit arrangement shown in Fig. 3 does not include a switching device to adapt its operation to the processing of video signals in accordance with the PAL standard or video signals in accordance with the NTSC standard, as in the case of the circuit arrangement shown in Fig. 2 but it is obvious that such a switching device may be included in a circuit arrangement as shown in Fig. 3.

## Claims

1. An apparatus for reproducing and processing a video signal stored on a record carrier, the luminance signal component of the video signal being stored on the record carrier in frequency-modulated form and the colour signal component being stored on said record carrier in frequency-converted form, which apparatus has at least one scanning means for scanning the record carrier and reproducing the stored luminance signal component and the stored colour signal component of a video signal, a frequency demodulator for the frequency demodulation of the reproduced luminance signal component, which demodulator is coupled to the output of the scanning means and supplies a frequency-demodulated luminance signal component on an output, a frequency reconverter for the frequency reconversion of the reproduced colour signal component, which reconverter is coupled to the output of the scanning means and supplies a reconverted colour signal component on an output, a first combination device coupled to the output of the frequency demodulator and to the output of the frequency reconverter, which first combination device combines the demodulated luminance signal component and the reconverted colour signal component to supply a combined signal on an output, a first delay device coupled to the output of the first combination device, which delay device has a delay time equal to one line period of the video signal and supplies on an output a combined signal delayed by one line period of the video signal, a filter device coupled to the output of the first delay device to extract the luminance signal component from the delayed combined signal and supplying on an output a demodulated luminance signal component delayed by one line period of the video signal, and a second combination device having a first input coupled to the output of the first combination device and having a second input coupled to the output of the first delay device to supply a comb-filtered reconverted colour signal component on an output, characterized in that a further delay device is included between the output of the first delay device and the second input of the second combination device, which further delay device has a delay time equal to one line period of the video signal and supplies on an output a signal delayed by two line periods of the video signal.

2. An apparatus as claimed in Claim 1, characterized in that the first delay device and the further delay device are each formed by a charge-coupled device, which charge-coupled devices each have a clock input, and there is provided a clock-generator device connected to the clock inputs, the clock-generator device being adapted to generate a clock signal whose clock frequency is equal to at least three times the colour subcarrier frequency of the video signal and which is applied to the two clock inputs of the charge-coupled devices.

3. An apparatus as claimed in Claim 1 or 2, characterized in that in addition to the further delay device a switching device switchable between two switching states is included between the output of the first delay device and the second input of the second combination device, the combined signal delayed by one line period of the video signal and appearing on the output of the first delay device being applied to the second input of the second combination device in the one switching state of said switching device, and the signal delayed by two line periods of the video signal and present at the output of the further delay device being applied to said second input of said second combination device in the other switching state of said switching device.

4. A circuit arrangement for an apparatus as claimed in any one of the Claims 1 to 3, for processing a video signal reproduced from a record carrier, the luminance signal component of the video signal being reproducible from the record carrier in frequency-modulated form and the colour signal component being reproducible from said record carrier in frequency-converted form, which arrangement has a frequency demodulator for the frequency demodulation of the reproduced luminance signal component, which demodulator supplies a frequency-demodulated luminance signal component on an output, a frequency reconverter for the frequency reconversion of the reproduced colour signal component, which reconverter supplies a reconverted colour signal component on an output, a first combination device coupled to the output of the frequency demodulator and to the output of the frequency reconverter, which first combination device combines the demodulated luminance signal component and the reconverted colour signal component to supply a combined signal on an output, a first delay device coupled to the output of the first combination device, which delay device has a delay time equal to one line period of the video signal and supplies on an output a combined signal delayed by one line period of the video signal, a filter device coupled to the output of the one delay device to extract the luminance signal component from the delayed combined signal and supplying on an output a demodulated luminance signal component delayed by one line period of the video signal, and a second combination device having a first input coupled to the output of the first combination device and having a second input coupled to the output of the first delay device to supply a comb-filtered reconverted colour signal component on an output, characterized in that a further delay device is included between the output of the first delay device and the second input of the second combination device, which further delay device has a delay time equal to one line period of the video signal and supplies on an output a signal delayed by two line periods of the video signal.

5. A circuit arrangement as claimed in Claim 4, for an apparatus as claimed in Claim 2, characterized in that the first delay device and the further delay device are each formed by a charge-coupled device, which charge-coupled devices each have a clock input, and there is provided a clock-generator device connected to the clock inputs, the clock-generator device being adapted to generate a clock signal whose clock frequency is equal to at least three times the colour subcarrier frequency of the video signal and which is applied to the two clock inputs of the charge-coupled devices.

6. A circuit arrangement as claimed in Claim 4 or 5, for an apparatus as claimed in any one of the Claims 1 to 3, characterized in that in addition to the further delay device a switching device switchable between two switching states is included between the output of the first delay device and the second input of the second combination device, the combined signal delayed by one line period of the video signal and appearing on the output of the first delay device being applied to the second input of the second combination device in the one switching state of said switching device, and the signal delayed by two line periods of the video signal and present at the output of the further delay device being applied to said second input of said second combination device in the other switching state of said switching device.
